# EUROPEAN PATENT SPECIFICATION

(11) **EP 2 778 368 B1**
(45) Date of publication and mention of the grant of the patent: **15.05.2019**
(21) Application number: 14159311.1
(22) Date of filing: 12.03.2014
(51) Int. Cl.: F02C 6/18, F01K 23/10, F02C 7/08

(54) **Combined-cycle power plant with control of the inlet air temperature and method for controlling a combined-cycle power plant**
Kombikraftwerk mit Regelung der Lufteintrittstemperatur und entsprechendes Verfahren
Centrale à cycle combiné avec commande de température d'entrée d'air et procédé correspondant

(30) Priority: 12.03.2013 IT MI20130368
(43) Date of publication of application: 17.09.2014
(73) Proprietor: Ansaldo Energia S.p.A., Genova (IT)
(72) Inventor: Negri, Anna Cecilia, 16163 Genova (IT); Borneto, Fabrizio, 16010 Sant'Olcese (IT); Primavera, Federica, 16153 Genova (IT)
(74) Representative: Bernotti, Andrea

(56) References cited:
- EP-A2- 2 189 637
- EP-A2- 2 196 651
- EP-A2- 2 535 542
- US-A- 3 879 616

## Description

The present invention concerns a combined-cycle power plant with control of the inlet air temperature and a method for controlling a combined-cycle power plant.

As is known, in combined-cycle power plants, hot exhaust gases produced by a gas turbine are exploited in a boiler in order to generate steam for a steam turbine. In this way, the thermal energy available at the gas turbine outlet, instead of being directly dispersed in the environment, is partly recovered and converted into mechanical energy (via the steam turbine) and then into electricity. The electricity may be generated by a generator connected to each turbine (multi-shaft configuration) or gas turbine and steam turbine may share one single generator (single-shaft configuration).

The efficiency of the combined cycle is strongly influenced by the environmental conditions and, in particular conditions, may be seriously affected. For example, when the temperature of the outside air drops below a threshold (around 5°C), the gas turbine is still able to maintain the mechanical power delivered substantially constant, but the energy content of the exhaust gases is impoverished. In this case it is said that the gas turbine has reached the mechanical limit. The performance of the steam turbine cycle is therefore seriously affected, since the power available to the boiler, which derives from the gas turbine exhaust gases, is reduced.

It should furthermore be considered that also the emission levels of polluting substances are influenced by the temperature of the ambient air used as combustive agent by the gas turbine. In particular, relatively low temperatures in the combustion chamber prevent complete oxidisation of the carbon, facilitating the formation of carbon monoxide.

In some regions, the ambient temperature is sufficiently high and operating conditions at the mechanical limit occur only in exceptional circumstances. There are, however, areas in which the mean temperatures are very low for long periods of the year and operating conditions at the mechanical limit of the gas turbine are frequent or even prevalent.

EP 2 535 542 A2 discloses a combined-cycle power plant comprising a gas turbine assembly, auxiliary devices, a closed cooling circuit for cooling the auxiliary devices, and an inlet-air heating device, for heating an inlet airflow of the gas turbine assembly. An auxiliary heat exchanger uses heat from a working fluid of the closed cooling circuit to heat an intermediate fluid, which is then sent to the inlet-air heating device.

The object of the present invention is therefore to provide a combined-cycle power plant and a combined-cycle power plant with control of the inlet air temperature and method for controlling a combined-cycle power plant which avoid or at least reduce the negative effects of the low ambient temperatures on efficiency.

According to the present invention, a combined-cycle power plant and a combined-cycle power plant with control of the inlet air temperature and method for controlling a combined-cycle power plant are provided, as defined in claims 1 and 13 respectively.

The present invention will now be described with reference to the accompanying drawings, which illustrate some non-limiting implementation examples, in which:
- figure 1 is a block diagram of a combined-cycle power plant according to one embodiment of the present invention;
- figure 2 is a more detailed block diagram of a part of the plant of figure 1; and
- figure 3 is a block diagram of a combined-cycle power plant according to a different embodiment of the present invention.

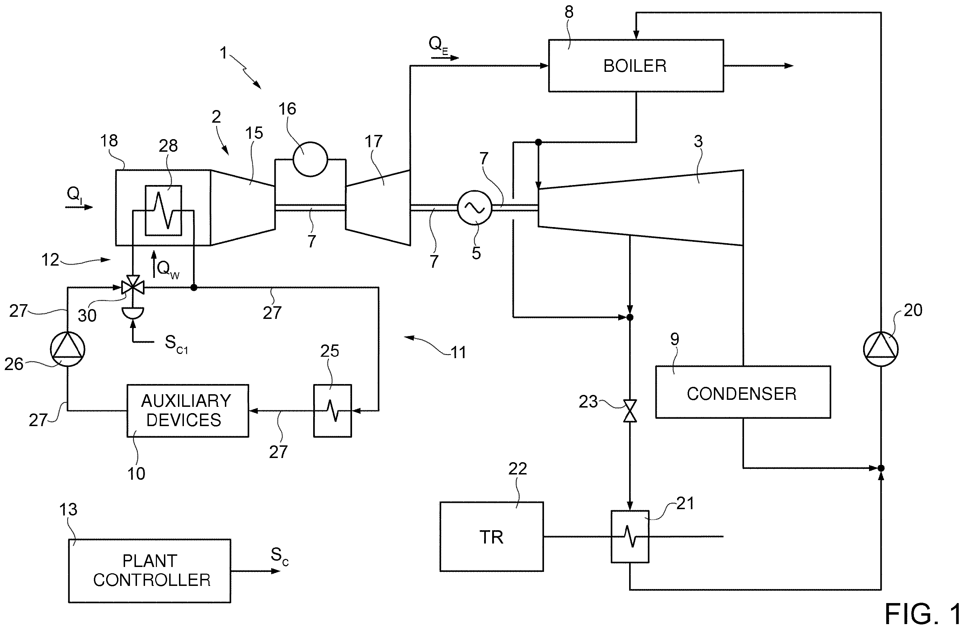

With reference to figure 1, a combined-cycle power plant is indicated overall by the number 1 and comprises a gas turbine assembly 2, a steam turbine 3 and an alternator 5 in configuration "1+1 single shaft". In practice, the gas turbine assembly 2, the steam turbine 3 and the alternator 5 use the same shaft 7.

The plant 1 furthermore comprises a boiler 8, a condenser 9, auxiliary devices 10, a closed cooling circuit 11 for the auxiliary devices 10 and an inlet air heating device 12 to control the temperature of the air flowing into the gas turbine assembly 2. A plant controller 13 coordinates operation of the various elements of the plant 1 on the basis of external loading requirements, loading programs and ambient conditions.

The gas turbine assembly 2 comprises a compressor 15, a combustion chamber 16 and a gas turbine 17. The compressor 15 and the gas turbine 17 are both mounted on the shaft 7.

The compressor 15 sucks an inlet airflow Q_{I} from the external environment through an air intake 18 and conveys it to the combustion chamber 16, where mixing with a controlled fuel flow and combustion take place. Part of the energy of the gases produced by the combustion is converted into mechanical work by the gas turbine 17 to operate the alternator 5. An exhaust gas flow Q_{E} is provided to the boiler 8 by the gas turbine 17 and is used to generate steam for the cycle by the steam turbine 3.

In figure 1, for the sake of simplicity, one single steam turbine section which receives a single supply of steam from the boiler 8 is shown. This is not limiting, however. The steam turbine 3 may comprise high, medium and low pressure sections as required. Furthermore, each section may receive from the boiler respective steam flows and the cycle may comprise appropriate steam superheating and re-superheating steps.

The steam processed by the steam turbine 3 is provided to the condenser 9. The condensed water is sent again to the boiler 8 by means of feed pumps 20.

In one embodiment, a fraction of the steam flow generated by the boiler 8 and a further flow drawn from the steam turbine are fed to a heat exchanger 21 to heat the water used in a remote heating system 22. The steam flow to the heat exchanger 21 is determined by the plant controller 13 through a regulating valve 23.

The auxiliary devices 10 comprise various electric and/or mechanical devices necessary for operation of the plant 1, even if not directly involved in the production of electricity. For example, the auxiliary devices 10 may comprise service components, such as boiler feed pumps, condensate extraction pumps, lubrication oil system, vacuum system, air compressors and so on.

Some of the auxiliary devices 10 must be cooled to operate correctly and safely.

The closed cooling circuit 11, which is also called closed cooling water system and uses water as the working fluid, is used to cool the auxiliary devices 10 of the plant 1 and comprises a heat exchanger 25 and pumps 26 connected to one another and to the auxiliary devices 10 by means of hydraulic lines 27.

The heat exchanger 25 may be in turn cooled by water or air. The pumps 26 circulate the cooling water between the heat exchanger 25 and the auxiliary devices 10.

The inlet air heating device 12 is connected to the closed cooling circuit 11 and uses a circulating cooling water flow Q_{W} to control the temperature of the air sucked by the compressor 15 through the air intake 18.

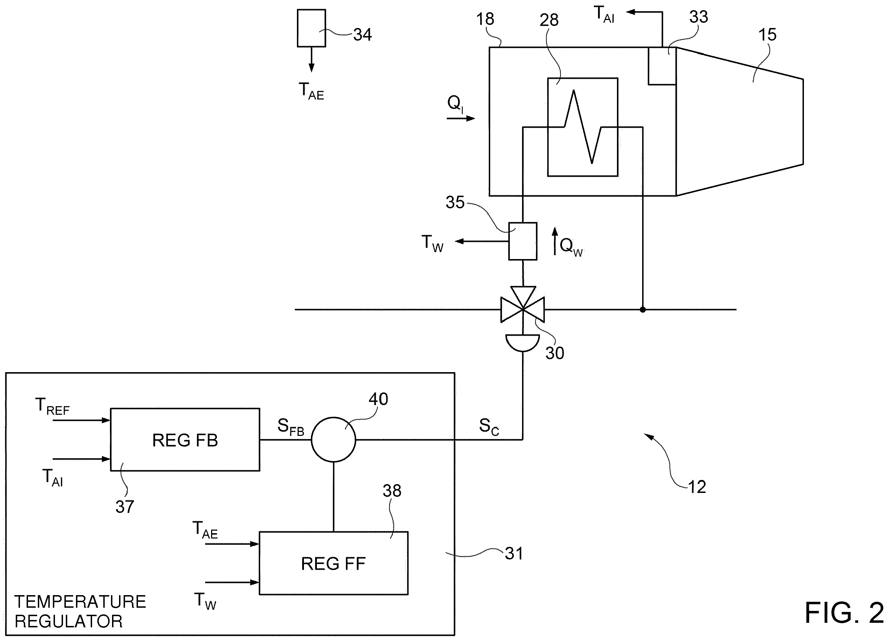

In one embodiment, the inlet air heating device 12 comprises a heat exchanger 28, a regulating valve 30 and a temperature regulator 31, which may be incorporated in the plant controller 13 and is illustrated in detail in figure 2. Furthermore, the inlet air heating device 12 uses sensors to detect ambient parameters necessary for the temperature regulation. In particular, the following are used in the inlet air heating device 12: a first temperature sensor 33, which provides a first temperature signal T_{AI}, representing the temperature of the air at the inlet of the compressor 15; a second temperature sensor 34, which provides a second temperature signal T_{AE}, representing the temperature of the air in the external environment (for example, at the inlet of the air intake 18); and a third temperature sensor 35, which provides a third temperature signal T_{W}, representing the temperature of the cooling water circulating in the closed cooling circuit 11 upstream of the heat exchanger 28 (upstream or, as in the embodiment illustrated, downstream of the regulating valve 30).

With reference to figures 1 and 2, the heat exchanger 28 is arranged along the air intake 18, so as to be hit by the inlet airflow Q_{I} sucked by the compressor 15. The heat exchanger 28 is a water-air exchanger and, in one embodiment, is of modular type with tube bundle.

In one embodiment, the regulating valve 30 is a three-way valve controlled by the temperature regulator 31 through a control signal S_{C}. The regulating valve 30 is arranged along one of the hydraulic lines 27 of the closed cooling circuit 11 immediately downstream of the auxiliary devices 10 (i.e. at the point where the cooling water has the highest temperature) and has an outlet connected to the inlet of the heat exchanger 28. The regulating valve 30 allows the supply of a controlled flow of cooling water Q_{W} towards the heat exchanger 28.

The cooling water coming out of the heat exchanger 28 is re-introduced into the hydraulic lines 27 of the closed cooling circuit 11 substantially without losses.

In one embodiment, after the heat exchange with the auxiliary devices 10, the cooling water is at a temperature between approximately 25°C and 30°C and has accumulated sufficient energy to heat the inlet airflow Q_{I} to a temperature higher than the mechanical limit temperature of the gas turbine assembly 2 (approximately 5°C), albeit starting from external ambient temperatures well below 0°C (even -20°C).

The solution described avoids non-optimised operating conditions, in which the steam turbine cycle 3 and therefore the general efficiency of the plant 1 may be severely affected due to the excessively low temperature of the air at the inlet to the compressor 15. Heating of the inlet airflow also improves the plant performance in terms of polluting emissions, in particular of carbon monoxide.

The objective is also achieved without subtracting further power from the cycles of the gas turbine assembly 2 and the steam turbine 3, using a source of energy which would otherwise be dispersed in the environment through the heat exchanger 28 of the closed cooling circuit 11. The invention therefore results in improved exploitation of the energy available in the plant 1.

The inlet air heating device 12 may also be used to replace the traditional anti-freeze systems, which normally recirculate air at medium temperature (up to approximately 400°C) drawn at the outlet of the compressor 15. Also in this case, an improvement in overall efficiency is obtained. The solution described allows exploitation of the available energy which would otherwise be dispersed, whereas the conventional systems subtract power from the main plant cycle.

With reference to figure 2, the temperature regulator 31 comprises a feedback control module (or closed circuit) 37, a feed forward control module (or open circuit) 38 and a calculation module 40, which combines the outputs of the feedback control module 37 and the feed forward control module 38.

The feedback control module 37 receives in input the first temperature signal T_{AI}, which represents the temperature of the air at the inlet of the compressor 15, and a reference signal T_{REF}, indicative of a target temperature to be reached for the air at the inlet of the compressor 15. The feedback control module 37 determines a temperature error from the difference between the first temperature signal T_{AI} and the reference signal T_{REF} and calculates a feedback signal S_{FB} so as to annul the temperature error. In particular, the feedback signal S_{FB} represents the position to be set for the regulating valve 30 so as to direct a cooling water flow Q_{W} towards the heat exchanger 28 such as to annul the temperature error. The feedback control module 37 can be based for example on a PI or PID regulator.

The feed forward control module 38 receives in input a second temperature signal T_{AE}, which represents the temperature of the air in the external environment, and the third temperature signal T_{W}, which represents the temperature of the cooling water circulating in the closed cooling circuit 11. The second temperature signal T_{AE} and the third temperature signal T_{W} are used to determine a correction of the feedback signal S_{FB} so as to anticipate control of the regulating valve 30 with an open circuit compensation action. This precaution makes the temperature regulator 31 more active and therefore provides a more rapid control.

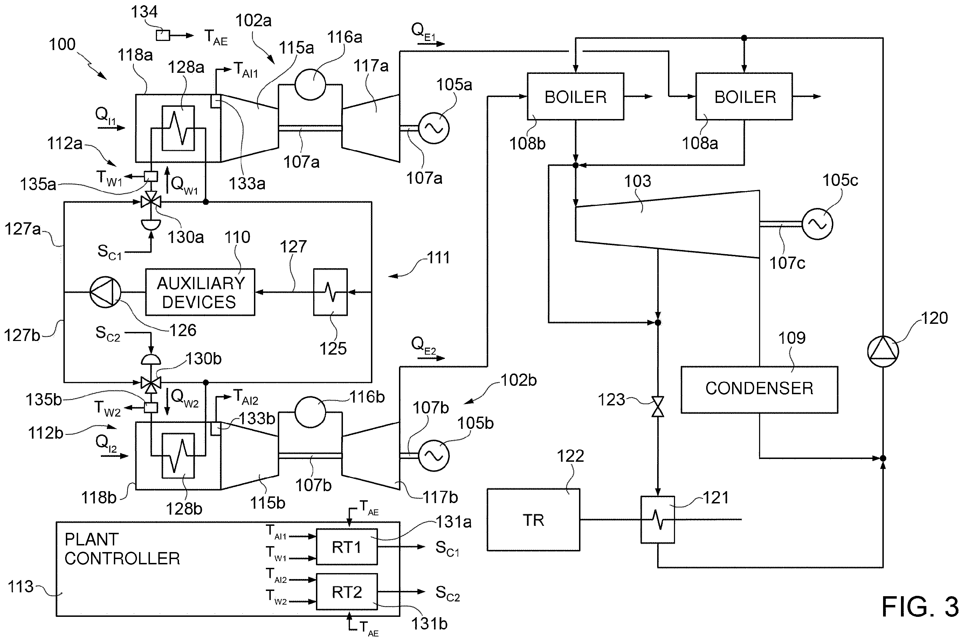

Figure 3 illustrates a different embodiment of the invention. In this case, a power plant 100 comprises a gas turbine assembly 102a, a gas turbine assembly 102b and a steam turbine 103 in "2+1" configuration. In other words, the gas turbine assembly 102a, the gas turbine assembly 102b and the steam turbine 103 use respective distinct shafts 107a, 107b, 107c, to which respective alternators 105a, 105b, 105c are coupled.

The plant 100 furthermore comprises a boiler 108a, a boiler 108b, a condenser 109, auxiliary devices 110, a closed cooling circuit 111 for the auxiliary devices 110, an inlet air heating device 112a to control the air temperature at the inlet of the gas turbine assembly 102a and an inlet air heating device 112b to control the air temperature at the inlet of the gas turbine assembly 102b. A plant controller 113 coordinates the operation of the various elements of the plant 100 on the basis of external load requirements, load programs and ambient conditions.

The gas turbine assembly 102a comprises a compressor 115a, a combustion chamber 116a and a gas turbine 117a. The compressor 115a and the gas turbine 117a are both mounted on the shaft 107a.

The compressor 115a sucks an inlet airflow Q_{I1} from the external environment through an air intake 118a and conveys it to the respective combustion chamber 116a, where mixing with a controlled fuel flow and combustion take place. Part of the energy of the gases produced by the combustion is converted into mechanical work by the gas turbine 117a to operate the alternator 105a. An exhaust gas flow Q_{E1} is provided to the boiler 108a by the gas turbine 117a and is used to generate steam for the cycle by the steam turbine 103.

Analogously, the gas turbine assembly 102b comprises a compressor 115b, a combustion chamber 116b and a gas turbine 117b. The compressor 115b and the gas turbine 117b are both mounted on the shaft 107b.

The compressor 115b sucks an inlet airflow Q_{I2} from the external environment through an air intake 118b and conveys it to the respective combustion chamber 116b, where mixing with a controlled fuel flow and combustion take place. Part of the energy of the gases produced by the combustion is converted into mechanical work by the gas turbine 117b to operate the alternator 105b. An exhaust gas flow Q_{E2} is provided to the boiler 108b by the gas turbine 117b and is used to generate steam for the cycle by the steam turbine 103.

The steam provided by the boilers 108a, 108b and processed by the steam turbine 3 is discharged to the condenser 109, which again sends the condensed water to the boilers 108a, 108b by means of feed pumps 120.

A fraction of the steam flow generated by the boilers 108a, 108b and a further flow drawn from the steam turbine are fed to a heat exchanger 121 to heat the water used in a remote heating system 122. The steam flow to the heat exchanger 121 is determined by the plant controller 112 through a regulating valve 123.

The closed cooling circuit 111 comprises a heat exchanger 125 and pumps 126 connected to one another and to the auxiliary devices 110 through hydraulic lines 127.

The inlet air heating device 112a is connected to a branch 127a of the closed cooling circuit 111 and uses a fraction of the flow of cooling water Q_{W1} circulating to control the temperature of the air sucked by the compressor 115a of the gas turbine assembly 102a through the air intake 118a.

The inlet air heating device 112a comprises a heat exchanger 128a, a regulating valve 130a and a temperature regulator 131a, which may be incorporated in the plant controller 113. Furthermore, the inlet air heating device 112a uses sensors to detect ambient parameters necessary for the temperature regulation. In particular, in the inlet air heating device 112a the following are used: a first temperature sensor 133a, which provides a first temperature signal T_{AI1}, representing the temperature of the air at the inlet of the compressor 115a; a second temperature sensor 134a, which provides a second temperature signal T_{AE}, representing the temperature of the air in the external environment; and a third temperature sensor 135a, which provides a third temperature signal T_{W1}, representing the temperature of the cooling water circulating in the branch 127a of the closed cooling circuit 111 upstream of the heat exchanger 128a (upstream or, as in the embodiment illustrated, downstream of the regulating valve 130a).

The heat exchanger 128a is arranged along the air intake 118a, so as to be hit by the inlet airflow Q_{I1} sucked by the compressor 115a.

The regulating valve 130a is a three-way valve controlled by the temperature regulator 131a through a control signal S_{C1}. The regulating valve 130a is arranged along the branch 127a of the closed cooling circuit 111 and has an outlet connected to the inlet of the heat exchanger 128°, so as to deviate a fraction of the cooling water flow Q_{W1} towards the heat exchanger 128a.

The cooling water flowing out of the heat exchanger 128a is re-introduced into the branch 127a of the closed cooling circuit 111 substantially without losses.

The inlet air heating device 112b is connected to a branch 127b of the closed cooling circuit 111 and uses a fraction of the cooling water flow Q_{W2} circulating to control the temperature of the air sucked by the compressor 115b of the gas turbine assembly 102b through the air intake 118b.

The inlet air heating device 112b comprises a heat exchanger 128b, a regulating valve 130b and a temperature regulator 131b, which may be incorporated in the plant controller 113. Furthermore, in the inlet air heating device 112b the following are used: a fourth temperature sensor 133b, which provides a fourth temperature signal T_{AI2}, representing the air temperature at the inlet of the compressor 115b; and a fifth temperature sensor 135b, which provides a fifth temperature signal T_{W2}, representing the temperature of the cooling water circulating in the branch 127b of the closed cooling circuit 111 upstream of the heat exchanger 128b (upstream or, as in the embodiment illustrated, downstream of the regulating valve 130b).

The heat exchanger 128b is arranged along the air intake 118b, so as to be hit by the inlet airflow Q_{I2} sucked by the compressor 115b.

The regulating valve 130b is a three-way valve controlled by the temperature regulator 131b through a control signal S_{C2}. The regulating valve 130b is arranged along the branch 127b of the closed cooling circuit 111 and has an outlet connected to the heat exchanger 128b, so as to divert a fraction of the cooling water flow Q_{W2} towards the heat exchanger 128b.

The cooling water flowing out of the heat exchanger 128b is re-introduced into the branch 127b of the closed cooling circuit 111 substantially without losses.

In one embodiment, the temperature regulators 131a, 131b are both produced like the temperature regulator described previously with reference to figure 2 and regulate the temperature of the air flowing into the compressors 115a, 115b independently. In a different embodiment, not illustrated, one single temperature regulator can be provided which regulates the temperature of the air flowing into the compressors 115a, 115b in a coordinated manner.

Lastly, it is obvious that modifications and variations can be made to the plant and method described, without departing from the scope of the present invention, as defined in the attached claims.

## Claims

1. A combined-cycle power plant, comprising:
a gas turbine assembly (2; 102a, 102b), having an air intake (18; 118a, 118b) for sucking an inlet airflow (QI; QI1, QI2); auxiliary devices (10; 110);
a closed cooling circuit (11;111) for cooling the auxiliary devices (10; 110), the closed cooling circuit (11; 111) comprising a first heat exchanger (25) and pumps (26) that circulate a working fluid between the first heat exchanger (25) and the auxiliary devices (10); and
an inlet-air heating device (12; 112a, 112b), operable to heat the inlet airflow (QI; QI1, QI2) sucked through the air intake (18; 118a, 118b);
**characterized in that** the inlet-air heating device (12; 112a, 112b) comprises:
a second heat exchanger (28; 128a, 128b), arranged along the air intake (18; 118a, 118b) so as to be hit by the inlet airflow (QI; QI1, QI2) and configured to allow heat exchange between the working fluid of the closed cooling circuit (11; 111) and the inlet airflow (QI; QI1, QI2) sucked through the air intake (18; 118a, 118b); and
a regulating valve (30; 130a, 130b) arranged along the closed cooling circuit (11; 111) and operable to control a working fluid flow (QW; QW1, QW2) of the closed cooling circuit (11; 111) provided to the second heat exchanger (28; 128a, 128b).

2. A plant according to claim 1, wherein an inlet of the second heat exchanger (28; 128a, 128b) is connected to the closed cooling circuit (11; 111) downstream of the auxiliary devices (10).

3. A plant according to any one of the preceding claims, wherein the working fluid is water and the second heat exchanger (28; 128a, 128b) is of the air-water type.

4. A plant according to any one of the preceding claims, wherein the regulating valve (30; 130a, 130b) is a three-way valve having an outlet connected to the second heat exchanger (28; 128a, 128b).

5. A plant according to any one of the preceding claims, comprising a further gas turbine assembly (102b, 102a), having a further air intake (118b, 118a) for sucking a further inlet airflow (QI2, QI1); and a further inlet-air heating device (112b, 112a), operable to heat the further inlet airflow (QI2, QI1) sucked through the further air intake (118b, 118a).

6. A plant according to claim 5, wherein the further inlet-air heating device (112b, 112a) comprises a third heat exchanger (128b, 128a), arranged along the further air intake (118b, 118a) so as to be hit by the further inlet airflow (QI2, QI1) and configured to allow heat exchange between the working fluid of the closed cooling circuit (111) and the further inlet airflow (QI2, QI1) sucked through the further air intake (18; 118a, 118b).

7. A plant according to claim 5 or 6, wherein the third heat exchanger (128b, 128a) is connected to the closed cooling circuit (111) so as to receive a further working fluid flow (QW2, QW1).

8. A plant according to any one of the claims from 5 7, wherein an inlet of the second heat exchanger (128b, 128a) is connected to the closed cooling circuit (111) downstream of the auxiliary devices (10).

9. A plant according to any one of claims 5 to 8, wherein the inlet-air heating device (112b, 112a) comprises a further regulating valve (130b, 130a) arranged along the closed cooling circuit (111) and operable to control the further working fluid flow (QW2, QW1) of the closed cooling circuit (111) provided to the third heat exchanger (128b, 128a).

10. A plant according to any one of the preceding claims, wherein the inlet-air heating device (12; 112a, 112b) comprises a temperature regulator (131; 131a, 131b) configured to regulate the temperature of the inlet airflow (QI; QI1, QI2) through the second heat exchanger (28; 128a, 128b).

11. A plant according to claim 10, wherein the temperature regulator (131; 131a, 131b) is configured to determine a position of the regulating valve (30; 130a, 130b) according to an inlet air temperature (TAI) and to a reference temperature (TREF) .

12. A plant according to claim 11, wherein the temperature regulator (131; 131a, 131b) comprises a feedback control module (37) and a feed forward control module (38).

13. A method for controlling a combined-cycle power plant, comprising:
a gas turbine assembly (2; 102a, 102b), having an air intake (18; 118a, 118b) for sucking an inlet airflow (QI; QI1, QI2); auxiliary devices (10; 110); and
a closed cooling circuit (11;111) for cooling the auxiliary devices (10; 110), the closed cooling circuit (11;111) comprising a heat exchanger (25) and pumps (26) that circulate a working fluid between the first heat exchanger (25) and the auxiliary devices (10);
the method comprising:
circulating a working fluid between the heat exchanger (25) and the auxiliary devices (10);
the method being **characterized by**:
collecting a working fluid flow (QW; QW1, QW2) from the closed cooling circuit (11; 111); and
using the working fluid flow (QW; QW1, QW2) to heat the inlet airflow (QI; QI1, QI2).

## Patentansprüche

1. Gas- und Dampf-Kombikraftwerk, umfassend:
eine Gasturbinenanordnung (2; 102a, 102b) mit einem Lufteintritt (18; 118a, 118b) zur Ansaugung eines Luftstromes (QI; QI1, QI2); Zusatzeinrichtungen (10; 110); einem geschlossenen Kühlkreis (11; 111) zur Kühlung der Zusatzeinrichtungen (10; 110), wobei der geschlossene Kühlkreis (11; 111) einen ersten Wärmetauscher (25) und Pumpen (26) umfasst, die eine Arbeitsflüssigkeit zwischen dem ersten Wärmetauscher (25) und den Zusatzeinrichtungen (10; 110) zirkulieren; und eine Ansaugluftheizvorrichtung (12; 112a, 112b), die dazu dient, den durch den Lufteintritt (18; 118a, 118b) angesaugten Ansaugluftstrom (QI; QI1, QI2) zu erwärmen;
**dadurch gekennzeichnet, dass** die Ansaugluftheizvorrichtung (12; 112a, 112b) Folgendes umfasst:
einen zweiten Wärmetauscher (28; 128a, 128b), der entlang dem Lufteintritt (18; 118a, 118b) angeordnet ist, so dass er von dem Ansaugluftstrom (QI; QI1, QI2) getroffen wird, und der den Wärmeaustausch zwischen der Arbeitsflüssigkeit des geschlossenen Kühlkreises (11; 111) und dem Ansaugluftstrom (QI; QI1, QI2) ermöglicht, der durch den Lufteintritt (18; 118a, 118b) angesaugt wird; und
ein Regelventil (30; 130a, 130b), das entlang dem geschlossenen Kühlkreis (11; 111) angeordnet ist und dazu dient, einen Arbeitsflüssigkeitsstrom (QW; QW1, QW2) des geschlossenen Kühlkreises (11; 111) zu regeln, der dem zweiten Wärmetauscher (28; 128a, 128b) zugeführt wird.

2. Kraftwerk nach Anspruch 1, wobei ein Einlass des zweiten Wärmetauschers (28; 128a, 128b) abströmseitig der Zusatzeinrichtungen (10) mit dem geschlossenen Kühlkreis (11; 111) verbunden ist.

3. Kraftwerk nach einem der vorstehenden Ansprüche, wobei die Arbeitsflüssigkeit Wasser ist und der zweite Wärmetauscher (28; 128a, 128b) ein Luft-Wasser-Wärmetauscher ist.

4. Kraftwerk nach einem der vorstehenden Ansprüche, wobei das Regelventil (30; 130a, 130b) ein Dreiwegeventil ist, dessen Auslass mit dem zweiten Wärmetauscher (28; 128a, 128b) verbunden ist.

5. Kraftwerk nach einem der vorstehenden Ansprüche, umfassend eine weitere Gasturbinenanordnung (102b, 102a) mit einem weiteren Lufteintritt (118b, 118a) zur Ansaugung eines weiteren Luftstromes (QI2, QI1) und einer weiteren Ansaugluftheizvorrichtung (112b, 112a), die dazu dient, den durch den weiteren Lufteintritt (118b, 118a) angesaugten weiteren Ansaugluftstrom (QI2, QI1) zu erwärmen.

6. Kraftwerk nach Anspruch 5, wobei die Ansaugluftheizvorrichtung (112b, 112a) einen dritten Wärmetauscher (128b; 128a), der entlang dem weiteren Lufteintritt (118b, 118a) angeordnet ist, so dass er von dem weiteren Ansaugluftstrom (QI2; QI1) getroffen wird, und der den Wärmeaustausch zwischen der Arbeitsflüssigkeit des geschlossenen Kühlkreises (111) und dem weiteren Ansaugluftstrom (QI2; QI1) ermöglicht, der durch den weiteren Lufteintritt (18; 118a, 118b) angesaugt wird.

7. Kraftwerk nach Anspruch 5 oder 6, wobei der dritte Wärmetauscher (128b; 128a) mit dem geschlossenen Kühlkreis (111) verbunden ist, um einen weiteren Arbeitsflüssigkeitsstrom (QW2, QW1) aufzunehmen.

8. Kraftwerk nach einem der Ansprüche 5 bis 7, wobei ein Einlass des zweiten Wärmetauschers (128b, 128a) abströmseitig der Zusatzeinrichtungen (10) mit dem geschlossenen Kühlkreis (111) verbunden ist.

9. Kraftwerk nach einem der Ansprüche 5 bis 8, wobei die Ansaugluftheizvorrichtung (112b, 112a) ein weiteres Regelventil (130b, 130a), das entlang dem geschlossenen Kühlkreis (111) angeordnet ist und dazu dient, den weiteren Arbeitsflüssigkeitsstrom (QW2; QW1) des geschlossenen Kühlkreises (111) zu regeln, der dem dritten Wärmetauscher (128b, 128a) zugeführt wird.

10. Kraftwerk nach einem der vorstehenden Ansprüche, wobei die Ansaugluftheizvorrichtung (12; 112a, 112b) einen Temperaturregler (131; 131a, 131b) umfasst, der dazu dient, die Temperatur des durch den zweiten Wärmetauscher (28; 128a, 128b) strömenden Ansaugluftstromes (QI; QI1, QI2a) zu regeln.

11. Kraftwerk nach Anspruch 10, wobei der Temperaturregler (131; 131a, 131b) dazu dient, eine Stellung des Regelventils (30; 130a, 130b) entsprechend einer Eintrittslufttemperatur (TAI) und einer Referenztemperatur (TREF) zu bestimmen.

12. Kraftwerk nach Anspruch 11, wobei der Temperaturregler (131; 131a, 131b) ein Rückkoppelungsmodul (37) und ein Vorsteuerungsmodul (38) umfasst.

13. Verfahren zur Steuerung eines Gas- und Dampf-Kombikraftwerks, umfassend:
eine Gasturbinenanordnung (2; 102a, 102b) mit einem Lufteintritt (18; 118a, 118b) zur Ansaugung eines Luftstromes (QI; QI1, QI2); Zusatzeinrichtungen (10; 110) und einen geschlossenen Kühlkreis (11; 111) zur Kühlung der Zusatzeinrichtungen (10; 110), wobei der geschlossene Kühlkreis (11; 111) einen Wärmetauscher (25) und Pumpen (26) umfasst, die eine Arbeitsflüssigkeit zwischen dem ersten Wärmetauscher (25) und den Zusatzeinrichtungen (10) zirkulieren; wobei das Verfahren Folgendes umfasst:
- Zirkulieren einer Arbeitsflüssigkeit zwischen dem Wärmetauscher (25) und den Zusatzeinrichtungen (10);
wobei das Verfahren **dadurch gekennzeichnet ist, dass**:
- eine Arbeitsflüssigkeit (QW; QW1, QW2) aus dem geschlossenen Kühlkreis (11; 111) gesammelt wird; und
- die Arbeitsflüssigkeit (QW; QW1, QW2) zum Erwärmen des Ansaugluftstromes (QI; QI1, QI2) verwendet wird.

## Revendications

1. Centrale à cycle combiné comprenant :
un groupe turbine à gaz (2 ; 102a, 102b) ayant une admission d'air (18 ; 118a, 118b) pour aspirer un écoulement d'air d'entrée (QI ; QI1, QI2) ;
des dispositifs auxiliaires (10 ; 110) ;
un circuit de refroidissement fermé (11 ; 111) pour refroidir les dispositifs auxiliaires (10 ; 110), le circuit de refroidissement fermé (11 ; 111) comprenant un premier échangeur de chaleur (25) et des pompes (26) qui font circuler un fluide de travail entre le premier échangeur de chaleur (25) et les dispositifs auxiliaires (10) ; et
un dispositif de chauffage d'air d'entrée (12 ; 112a, 112b) opérationnel pour chauffer l'écoulement d'air d'entrée (QI ; QI1, QI2) aspiré par l'admission d'air (18 ; 118a, 118b) ;
**caractérisée en ce que** le dispositif de chauffage d'air d'entrée (12 ; 112a, 112b) comprend :
un deuxième échangeur de chaleur (28; 128a, 128b) agencé le long de l'admission d'air (18 ; 118a, 118b) afin d'être frappé par l'écoulement d'air d'entrée (QI ; QI1, QI2) et configuré pour permettre l'échange de chaleur entre le fluide de travail du circuit de refroidissement fermé (11 ; 111) et l'écoulement d'air d'entrée (QI ; QI1, QI2) aspiré par l'admission d'air (18 ; 118a, 118b) ; et
une valve de régulation (30 ; 130a, 130b) agencée le long du circuit de refroidissement fermé (11 ; 111) et opérationnelle pour réguler un écoulement de fluide de travail (QW ; QW1, QW2) du circuit de refroidissement fermé (11 ; 111) prévu sur le deuxième échangeur de chaleur (28 ; 128a, 128b).

2. Centrale selon la revendication 1, dans laquelle une entrée du deuxième échangeur de chaleur (28 ; 128a, 128b) est raccordée au circuit de refroidissement fermé (11 ; 111) en aval des dispositifs auxiliaires (10).

3. Centrale selon l'une quelconque des revendications précédentes, dans laquelle le fluide de travail est de l'eau et le deuxième échangeur de chaleur (28 ; 128a, 128b) est du type air - eau.

4. Centrale selon l'une quelconque des revendications précédentes, dans laquelle la valve de régulation (30 ; 130a, 130b) est une valve à trois voies ayant une sortie raccordée au deuxième échangeur de chaleur (28 ; 128a, 128b).

5. Centrale selon l'une quelconque des revendications précédentes, comprenant un autre groupe turbine à gaz (102b, 102a) ayant une autre admission d'air (118b, 118a) pour aspirer un autre écoulement d'air d'entrée (QI2, QI1) ; et un autre dispositif de chauffage d'air d'entrée (112b, 112a) opérationnel pour chauffer l'autre écoulement d'air d'entrée (QI2, QI1) aspiré par l'autre admission d'air (118b, 118a).

6. Centrale selon la revendication 5, dans laquelle l'autre dispositif de chauffage d'air d'entrée (112b, 112a) comprend un troisième échangeur de chaleur (128b, 128a), agencé le long de l'autre admission d'air (128b, 118a) afin d'être frappé par l'autre écoulement d'air d'entrée (QI2, QI1) et configuré pour permettre l'échange de chaleur entre le fluide de travail du circuit de refroidissement fermé (111) et l'autre écoulement d'air d'entrée (QI2, QI1) aspiré par l'autre admission d'air (18 ; 118a, 118b).

7. Centrale selon la revendication 5 ou 6, dans laquelle le troisième échangeur de chaleur (128b, 128a) est raccordé au circuit de refroidissement fermé (111) afin de recevoir un autre écoulement de fluide de travail (QW2, QW1).

8. Centrale selon l'une quelconque des revendications 5 à 7, dans laquelle une entrée du deuxième échangeur de chaleur (128b, 128a) est raccordée au circuit de refroidissement fermé (111) en aval des dispositifs auxiliaires (10).

9. Centrale selon l'une quelconque des revendications 5 à 8, dans laquelle le dispositif de chauffage d'air d'entrée (112b, 112a) comprend une autre valve de régulation (130b, 130a) agencée le long du circuit de refroidissement fermé (111) et opérationnelle pour réguler l'autre écoulement de fluide de travail (QW2, QW1) du circuit de refroidissement fermé (111) prévu sur le troisième échangeur de chaleur (128b, 128a).

10. Centrale selon l'une quelconque des revendications précédentes, dans laquelle le dispositif de chauffage d'air d'entrée (12 ; 112a, 122b) comprend un régulateur de température (131 ; 131a, 131b) configuré pour réguler la température de l'écoulement d'air d'entrée (QI ; QI1, QI2) à travers le deuxième échangeur de chaleur (28 ; 128a, 128b).

11. Centrale selon la revendication 10, dans laquelle le régulateur de température (131 ; 131a, 131b) est configuré pour déterminer une position de la valve de régulation (30; 130a, 130b) selon une température d'air d'entrée (TAI) et une température de référence (TREF).

12. Centrale selon la revendication 11, dans laquelle le régulateur de température (131 ; 131a, 131b) comprend un module de contrôle de rétroaction (37) et un module de contrôle à action anticipatrice (38).

13. Procédé pour contrôler une centrale à cycle combiné comprenant :
un groupe turbine à gaz (2 ; 102a, 102b) ayant une admission d'air (18 ; 118a, 118b) pour aspirer un écoulement d'air d'entrée (QI ; QI1, QI2) ;
des dispositifs auxiliaires (10 ; 110) ; et
un circuit de refroidissement fermé (11 ; 111) pour refroidir les dispositifs auxiliaires (10 ; 110), le circuit de refroidissement fermé (11 ; 111) comprenant un échangeur de chaleur (25) et des pompes (26) qui font circuler un fluide de travail entre le premier échangeur de chaleur (25) et les dispositifs auxiliaires (10) ;
le procédé comprenant l'étape consistant à :
faire circuler un fluide de travail entre l'échangeur de chaleur (25) et les dispositifs auxiliaires (10) ;
le procédé étant **caractérisé par** les étapes consistant à :
collecter un écoulement de fluide de travail (QW ; QW1, QW2) du circuit de refroidissement fermé (11 ; 111) ; et
utiliser l'écoulement de fluide de travail (QW ; QW1, QW2) pour chauffer l'écoulement d'air d'entrée (QI ; QI1, QI2).
